# EUROPEAN PATENT SPECIFICATION

(11) **EP 3 327 960 B1**
(45) Date of publication and mention of the grant of the patent: **04.12.2019**
(21) Application number: 17768659.9
(22) Date of filing: 23.05.2017
(51) Int. Cl.: H04B 10/50, H04B 10/67, H04B 10/70, H04B 10/40

(54) **REMOTE TERAHERTZ COMMUNICATION SYSTEM**
TERAHERTZ-FERNKOMMUNIKATIONSSYSTEM
SYSTÈME DE COMMUNICATION TÉRAHERTZ À DISTANCE

(30) Priority: 11.10.2016 CN 201610890115
(43) Date of publication of application: 30.05.2018
(73) Proprietor: Shenzhen Institute of Terahertz Technology and Innovation, Shenzhen, Guangdong 518102 (CN); China Communication Technology Co., Ltd., Shenzhen, Guangdong 518102 (CN)
(72) Inventor: YANG, Bin, Shenzhen Guangdong 518000 (CN); ZHENG, Zhu, Shenzhen Guangdong 518000 (CN); DING, Qing, Shenzhen Guangdong 518000 (CN)
(74) Representative: Müller Schupfner & Partner Patent- und Rechtsanwaltspartnerschaft mbB
(86) International application number: PCT/CN2017/085539
(87) International publication number: WO 2018/068512

(56) References cited:
- CN-A- 104 684 026
- CN-A- 104 684 026
- CN-A- 105 827 356
- CN-A- 106 253 993
- CN-U- 206 117 672
- US-A1- 2007 031 151
- US-A1- 2011 098 033
- US-A1- 2012 086 608
- US-A1- 2016 030 967
- ZHANG, JIAN ET AL.: 'Terahertz high speed wireless communications:systems, techniques and demonstrations' JOURNAL OF TERAHERTZ SCIENCE AND ELECTRONIC INFORMATION TECHNOLOGY vol. 12, no. 1, 28 February 2014, XP055440171

## Description

### Technical Field

The embodiments of the present invention belong to the technical field of remote terahertz communication, and in particular relate to a remote terahertz communication system.

### Description of the Related Art

Terahertz communication has the features of high transmission rate, good directionality, high security, small diffraction, and high penetrability, etc. At present, limited by serious water absorption and low transmitting power, terahertz communication is only applicable to near field transmission. To perform far terahertz communication, besides breakthrough in transmitting power, transmitting and receiving signals using high gain directional antennas is also an important technical means.

However, transmitting and receiving signals using high gain directional antennas generates a problem that it is difficult to align and maintain the communication links, in particular the problem that it is very difficult to maintain smooth real-time communication of the terahertz communication link in applications of on-board terahertz communication or satellite-ground terahertz communication.

US2011/0142452 considers the difficulty in remote terhertz communication systems in transmitting and receiving in the terahetz range. The problem is overcome by using a split ring resonator to function as a high gain omnidirectional antenna.

### Summary of the Present Invention

The objective of the present invention is to provide a remote terahertz communication system, aiming at solving the problem that it is difficult to align and maintain the communication links, in particular the problem that it is very difficult to maintain smooth real-time communication of the terahertz communication link in applications of on-board terahertz communication or satellite-ground terahertz communication.

The present invention firstly provides a remote terahertz communication system including a terahertz transmitting device and a terahertz receiving device; the terahertz transmitting device includes a terahertz transmitter, a first high gain directional antenna, a first laser transmitting module, a first laser receiving module, a first optical path adjusting module and a first control module; and the terahertz receiving device includes a terahertz receiver, a second high gain directional antenna, a second laser transmitting module, a second laser receiving module, a second optical path adjusting module and a second control module.

The first control module is respectively connected with the first laser receiving module and the first optical path adjusting module, and the second control module is respectively connected with the second laser receiving module and the second optical path adjusting module.

The terahertz transmitter transmits a first modulated terahertz signal; the first laser transmitting module transmits a first colored laser signal; the first optical path adjusting module combines the first terahertz signal and the first colored laser signal into a beam of signal light and transmits the signal light to the terahertz receiving device through the first high gain directional antenna. The second high gain directional antenna receives the signal light and the second optical path adjusting module divides the signal light into the first terahertz signal and the first colored laser signal; the terahertz receiver receives and demodulates the first terahertz signal; the second laser receiving module receives the first colored laser signal; the second control module controls the second optical path adjusting module to adjust the signal receiving direction of the second high gain directional antenna according to the signal strength of the first colored laser signal.

The second laser transmitting module transmits a second colored laser signal and transmits the second colored laser signal to the second high gain directional antenna through the second optical path adjusting module, and the second high gain directional antenna transmits the second colored laser signal to the terahertz transmitting device. The first high gain directional antenna receives the second colored laser signal and transmits the received signal to the first laser receiving module through the first optical path adjusting module, and the first control module controls the first optical path adjusting module to adjust the signal transmitting direction of the first high gain directional antenna according to the signal strength of the second colored laser signal.

Preferably, the first optical path adjusting module includes a first dichroic mirror, a first fast steering mirror and a second dichroic mirror, and the first fast steering mirror is connected with the first control module.

The first dichroic mirror combines the first terahertz signal and the first colored laser signal into a beam of signal light and transmits the signal light to the first fast steering mirror; the first fast steering mirror reflects the signal light to the second dichroic mirror; and the second dichroic mirror reflects the signal light to the first high gain directional antenna.

The second colored laser signal is transmitted to the first laser receiving module by the second dichroic mirror, and the first fast steering mirror is controlled by the first control module to adjust its own reflecting angle.

Preferably, the second optical path adjusting module includes a third dichroic mirror, a second fast steering mirror and a fourth dichroic mirror, and the second fast steering mirror is connected with the second control module.

The third dichroic mirror divides the signal light into the first terahertz signal and the first colored laser signal; the first terahertz signal is reflected to the second fast steering mirror by the third dichroic mirror; the second fast steering mirror reflects the first terahertz signal to the fourth dichroic mirror, and the fourth dichroic mirror reflects the first terahertz signal to the terahertz receiver.

The first colored laser signal is transmitted to the second laser receiving module by the third dichroic mirror, and the second fast steering mirror is controlled by the second control module to adjust its own reflecting angle.

The second colored laser signal is transmitted by the fourth dichroic mirror, reflected by the second fast steering mirror, reflected by the third dichroic mirror in turn and then transferred to the second high gain directional antenna.

Preferably, the color of the first colored laser signal is different from the color of the second color laser signal.

Preferably, the first colored laser signal is red light with a wavelength of 650nm, and the second colored laser signal is green light with a wavelength of 532nm; Or, the first colored laser signal is green light with a wavelength of 532nm, and the second colored laser signal is red light with a wavelength of 650nm.

Compared with the prior art, the present invention has the following technical advantages.

The terahertz transmitting device transmits the first colored laser signal, and the terahertz receiving device receives the second colored laser signal, so that the terahertz transmitting device controls the signal transmitting direction of the first high gain directional antenna thereof according to the signal strength of the second colored laser signal, and the terahertz receiving device controls the signal receiving direction of the second high gain directional antenna thereof according to the signal strength of the first colored laser signal. Therefore, the first high gain directional antenna and the second high gain directional antenna can be aligned with each other in real time to ensure that the communication link of the remote terahertz communication system is unobstructed in real time.

### Brief Description of the Attached Drawings

To describe the technical solution in the embodiments of the present invention more clearly, the following is a brief description of the attached drawings used in the embodiments. Obviously, the attached drawings described below only involve some embodiments of the present invention. For those ordinarily skilled in the art, other drawings can be made according to those drawings without creative labor.
FIG.1 is a basic structural block diagram of a remote terahertz communication system provided in an embodiment of the present invention.
FIG.2 is a specific structural block diagram of a remote terahertz communication system provided in an embodiment of the present invention.

### Description of Embodiments

For better understanding of the present invention by those skilled in the art, the technical solutions in embodiments of the present invention are described clearly below with reference to the drawings in the embodiments of the present invention. Obviously, the described embodiments are some embodiments of the present invention, not all the embodiments of the present invention. Based on the embodiments in the present invention, those ordinarily skilled in the art can obtain other embodiments without creative labor, which should all fall within the protective scope of the present invention.

The terms "include" and any other words with the same meaning in the Description, Claims and Attached Drawings of the present invention are used for the purpose of covering non-exclusive inclusion. For example, processes, methods or systems, products or devices which include a series of steps or units are not limited to the listed steps or units, but also optionally include unlisted steps or units, or optionally include other inherent steps or units of those processes, methods, products or devices. Besides, the terms "first", "second", "third", etc. are used for distinguishing different objects instead of describing specific sequences.

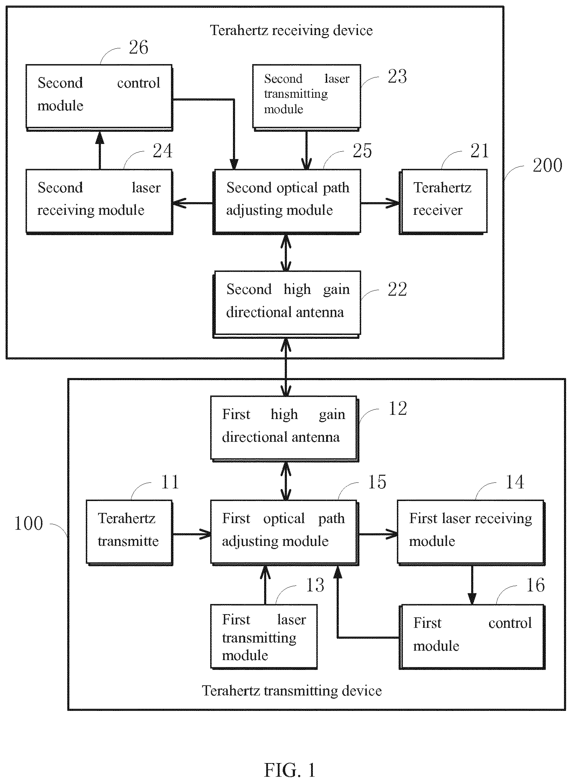

As shown in FIG.1, this embodiment provides a remote terahertz communication system, including a terahertz transmitting device 10 and a terahertz receiving device 20.

The terahertz transmitting device 10 includes a terahertz transmitter 11, a first high gain directional antenna 12, a first laser transmitting module 13, a first laser receiving module 14, a first optical path adjusting module 15 and a first control module 16. The first control module 16 is respectively connected with the first laser receiving module 14 and the first optical path adjusting module 15.

The terahertz receiving device 20 includes a terahertz receiver 21, a second high gain directional antenna 22, a second laser transmitting module 23, a second laser receiving module 24, a second optical path adjusting module 25 and a second control module 26. The second control module 26 is respectively connected with the second laser receiving module 24 and the second optical path adjusting module 25.

In specific applications, both the first laser transmitting module and the second laser transmitting module may be lasers, and both the first laser receiving module and the second laser receiving module may be laser receivers.

In specific applications, the first control module and the second control module can be individual control devices which are made of universal integrated circuits, for example CPU (Central Processing Unit) or ASIC (Application Specific Integrated Circuit), and can be respectively integrated with the first laser receiving module and the second laser receiving module.

In specific applications, a first colored laser signal can be selected as red light with a wavelength of 650nm, and a second colored laser signal can be selected as green light with a wavelength of 532nm; or the two are exchanged, which means that the first colored laser signal can be selected as green light with a wavelength of 532nm, and a second colored laser signal can be selected as red light with a wavelength of 650nm. In actual applications, the first colored laser signal and the second colored laser signal can be selected as other colored laser light which can be easily identified.

The first optical path adjusting module and the second optical path adjusting module are both used for changing the optical paths, namely the transmission directions, of the light signals, so that the light signals can be transmitted among all devices.

The working principle of the remote terahertz communication system provided by this embodiment is as follows.

The terahertz transmitter transmits a first modulated terahertz signal; the first laser transmitting module transmits the first colored laser signal; the first optical path adjusting module combines the first modulated terahertz signal and the first colored laser signal into a beam of signal light, and transmits the signal light to the terahertz receiving device through the first high gain directional antenna.

The second high gain directional antenna receives the signal light; the econd optical path adjusting module divides the signal light into the first terahertz signal and the first colored laser signal; the terahertz receiver receives and demodulates the first terahertz signal, while the second laser receiving signal receives the first colored laser signal; the second control module controls the second optical path adjusting module to adjust the signal receiving direction of the second high gain directional antenna according to the signal strength of the first colored laser signal.

The second laser transmitting module transmits the second colored laser signal and transfers the second colored laser signal to the second high gain directional antenna through the second optical path adjusting module, and the second high gain directional antenna transmits the second colored laser signal to the terahertz transmitting device.

The first high gain directional antenna receives the second colored laser signal and transfers the second colored laser signal to the first laser receiving module through the first optical path adjusting module, and the first control module controls the first optical path adjusting module to adjust the signal transmitting direction of the first high gain directional antenna according to the signal strength of the second colored laser signal.

In specific applications, if the first high gain directional antenna and the second high gain directional antenna are aligned to transmit and receive signals, the consumption of the signal strength of the colored laser signals received by the two antennas from the opposite party should be maintained within a preset scope; if the consumption of the signal strength of the colored laser signals received by the two antennas from the opposite party is greater than a preset threshold value, respective control modules of the antennas can control corresponding optical path adjusting modules to adjust the signal transmitting directions of respective high gain directional antennas, so that the high gain directional antenna of the terahertz transmitting device and the high gain directional antenna of the terahertz receiving device can be aligned with each other in real time to ensure that the communication link of the remote terahertz communication system is unobstructed in real time.

In this embodiment, two colored laser signals which are easily identified are imported as signal marks to ensure that the high gain directional antenna of the terahertz transmitting device and the high gain directional antenna of the terahertz receiving device are aligned with each other in real time. The structure is simple, easy in implementation, and low in cost, can effectively ensure that communication link of the remote terahertz communication system is unobstructed in real time, and therefore is applicable to wide use.

In this embodiment, the terahertz transmitting device transmits the first colored laser signal, and the terahertz receiving device transmits the second colored laser signal, so that the terahertz transmitting device controls the signal transmitting direction of the first high gain directional antenna thereof according to the signal strength of the second colored laser signal, and the terahertz receiving device controls the signal receiving direction of the second high gain directional antenna thereof according to the signal strength of the first colored laser signal. Therefore, the first high gain directional antenna and the second high gain directional antenna can be aligned with each other in real time to ensure that the communication link of the remote terahertz communication system is unobstructed in real time.

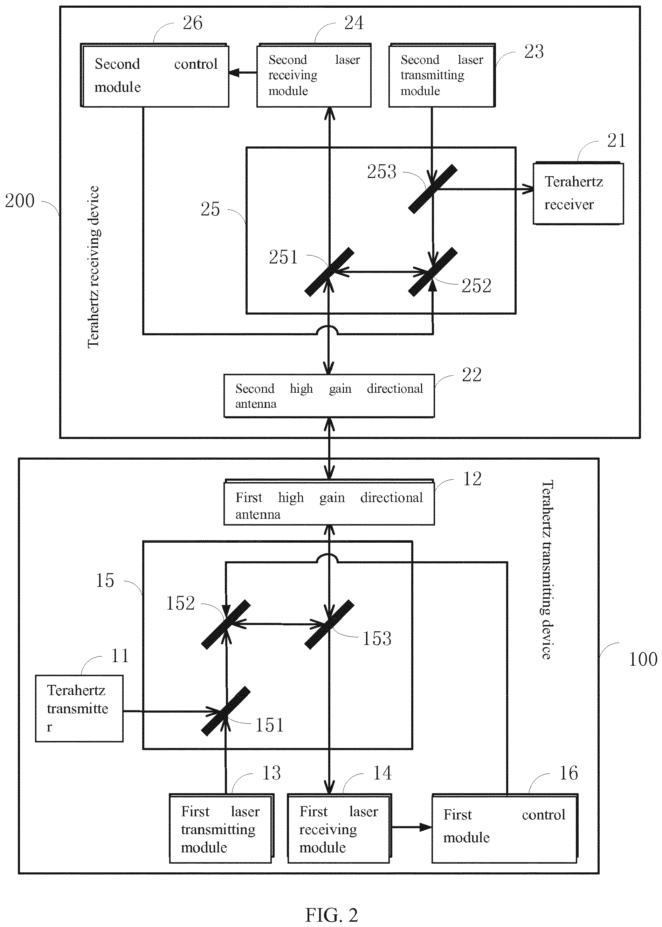

As shown in FIG.2, in this embodiment, the first optical path adjusting module 15 includes a first dichroic mirror 151, a first fast steering mirror 152 and a second dichroic mirror 153; the first fast steering mirror 152 is connected with the first control module 16; the second optical path adjusting module 25 includes a third dichroic mirror 251, a second fast steering mirror 252 and a fourth dichroic mirror 253; and the second fast steering mirror 252 is connected with the second control module 26.

In this embodiment, the working principle of the first optical path adjusting module is as follows:
The first dichroic mirror combines the first terahertz signal and the first colored laser signal into a beam of signal light and transmits the signal light to the first fast steering mirror; the first fast steering mirror reflects the signal light to the second dichroic mirror; and the second dichroic mirror reflects the signal light to the first high gain directional antenna.

The second colored laser signal is transmitted to the first laser receiving module by the second dichroic mirror, and the first fast steering mirror is controlled by the first control module to adjust its own reflecting angle.

In this embodiment, the working principle of the second optical path adjusting module is as follows:
The third dichroic mirror divides the signal light into the first terahertz signal and the first colored laser signal; the first terahertz signal is transmitted to the second fast steering mirror by the third dichroic mirror; the second fast steering mirror reflects the first terahertz signal to the fourth dichroic mirror, and the fourth dichroic mirror reflects the first terahertz signal to the terahertz receiver.

The first colored laser signal is transmitted to the second laser receiving module by the third dichroic mirror, and the second fast steering mirror is controlled by the second control module to adjust its own reflecting angle.

The second colored laser signal is transmitted by the fourth dichroic mirror, reflected by the second fast steering mirror, reflected by the third dichroic mirror in turn and then transferred to the second high gain directional antenna.

In this embodiment, the control module controls the fast steering mirrors to adjust their own reflecting angles, so the real-time adjustment of the signal transmitting and receiving directions of the high gain directional antennas can be quickly and stably implemented. In this way, the high gain directional antenna of the terahertz transmitting device and the high gain directional antenna of the terahertz receiving device can be aligned with each other in real time to ensure that the communication link of the remote terahertz communication system is unobstructed in real time. The structure is simple, easy in implementation and low in cost.

In this embodiment, only the structural block diagram of the one-way terahertz transmission of the remote terahertz communication system is shown. In specific applications, the terahertz communication is usually a two-way transmission process, so an entire remote terahertz communication system typically include two sets of corresponding terahertz transmitting devices and terahertz receiving devices which are identical in working principle and structures and therefore are not repeatedly described in this embodiment.

In a specific embodiment, based on the reversibility principle of optical path, the terahertz transmitter and the terahertz receiver in the remote terahertz communication system provided in the above embodiments can be equivalently replaced by two terahertz transceivers to generate a remote terahertz communication system which can transmit the terahertz signals in two directions.

The solid arrows in all attached drawings of the present invention represent the transmission directions of the analogue signals or digital signals, while the dotted arrows indicate the transmission directions of the light signals. It can be understood that the optical path is reversible, so in specific applications, the transmission directions of the light signals can also be reversible upon actual demands.

The above embodiments are only preferably embodiments of the present invention and shall not be regarded as limit of the present invention. Any modifications, equivalent changes and improvement made within the scope of the claims of the present invention shall fall within the protective scope of the present invention.

## Claims

1. A remote terahertz communication system, comprises a terahertz transmitting device (10) and a terahertz receiving device (20), wherein the terahertz transmitting device (10) comprises a terahertz transmitter (11), a first high gain directional antenna (12), a first laser transmitting module (13), a first laser receiving module (14), a first optical path adjusting module (15) and a first control module (16); the terahertz receiving device (20) comprises a terahertz receiver (21), a second high gain directional antenna (22), a second laser transmitting module (23), a second laser receiving module (24), a second optical path adjusting module (25) and a second control module (26);
wherein the first control module (16) is respectively connected with the first laser receiving module (14) and the first optical path adjusting module (15), and the second control module (26) is respectively connected with the second laser receiving module (24) and the second optical path adjusting module (25);
wherein the terahertz transmitter (11) is configured to transmit a first modulated terahertz signal, the first laser transmitting module (13) is configured to transmit a first colored laser signal, the first optical path adjusting module (15) is configured to combine the first terahertz signal and the first colored laser signal into a beam of signal light and to transmit the signal light to the terahertz receiving device (20) through the first high gain directional antenna (12); wherein the second high gain directional antenna (22) is configured to receive the signal light, the second optical path adjusting module (25) is configured to divide the signal light into the first terahertz signal and the first colored laser signal, the terahertz receiver (21) is configured to receive and demodulate the first terahertz signal, the second laser receiving module (24) is configured to receive the first colored laser signal, the second control module (26) is configured to control the second optical path adjusting module (25) to adjust the signal receiving direction of the second high gain directional antenna (22) according to the signal strength of the first colored laser signal;
wherein second laser transmitting module (22) is configured to transmit a second colored laser signal and to transmit the second colored laser signal to the second high gain directional antenna (22) through the second optical path adjusting module (25), the second high gain directional antenna (22) being configured to transmit the second colored laser signal to the terahertz transmitting device (10); wherein the first high gain directional antenna (12) is configured to receive the second colored laser signal and to transmit the received signal to the first laser receiving module (14) through the first optical path adjusting module (15), and the first control module (16) is configured to control the first optical path adjusting module (15) to adjust the signal transmitting direction of the first high gain directional antenna (12) according to the signal strength of the second colored laser signal.

2. The remote terahertz communication system according to claim 1, **characterized in that** the first optical path adjusting module (15) comprises a first dichroic mirror, a first fast steering mirror and a second dichroic mirror, the first fast steering mirror is connected with the first control module (16);
wherein the first dichroic mirror is configured to combine the first terahertz signal and the first colored laser signal into a beam of signal light and to transmit the signal light to the first fast steering mirror, the first fast steering mirror being configured to reflect the signal light to the second dichroic mirror, and the second dichroic mirror being configured to reflect the signal light to the first high gain directional antenna (12);
wherein the second colored laser signal is transmitted to the first laser receiving module (14) by the second dichroic mirror, and the first fast steering mirror is controlled by the first control module to adjust its own reflecting angle.

3. The remote terahertz communication system according to claim 1, **characterized in that** the second optical path adjusting module (25) comprises a third dichroic mirror, a second fast steering mirror and a fourth dichroic mirror, and the second fast steering mirror is connected with the second control module;
wherein the third dichroic mirror is configured to divide the signal light into the first terahertz signal and the first colored laser signal, the first terahertz signal being reflected to the second fast steering mirror by the third dichroic mirror, the second fast steering mirror being configured to reflect the first terahertz signal to the fourth dichroic mirror, and the fourth dichroic mirror being configured to reflect the first terahertz signal to the terahertz receiver (21);
wherein the first colored laser signal is transmitted to the second laser receiving module by the third dichroic mirror, and the second fast steering mirror is controlled by the second control module (26) to adjust its own reflecting angle;
wherein the second colored laser signal is transmitted by the fourth dichroic mirror, reflected by the second fast steering mirror, reflected by the third dichroic mirror in turn and then transferred to the second high gain directional antenna (22).

4. The remote terahertz communication system according to claim 1, **characterized in that** the color of the first colored laser signal is different from the color of the second color laser signal.

5. The remote terahertz communication system according to claim 4, **characterized in that** the first colored laser signal is red light with a wavelength of 650nm, and the second colored laser signal is green light with a wavelength of 532nm;
or, the first colored laser signal is green light with a wavelength of 532nm, and the second colored laser signal is red light with a wavelength of 650nm.

## Patentansprüche

1. Terahertz-Fernkommunikationssystem, umfassend eine Terahertz-Sendevorrichtung (10) und eine Terahertz-Empfangsvorrichtung (20), wobei die Terahertz-Sendevorrichtung (10) einen Terahertz-Sender (11), eine ersten Richtantenne mit hoher Verstärkung (12), eine erstes Lasersendemodul (13), ein erstes Laserempfangsmodul (14), ein erstes Strahlengangeinstellungsmodul (15) und ein erstes Steuermodul (16) umfasst; wobei die Terahertz-Empfangsvorrichtung (20) einen Terahertz-Empfänger (21), eine zweiten Richtantenne mit hoher Verstärkung (22), ein zweites Lasersendemodul (23), ein zweites Laserempfangsmodul (24), ein zweites Strahlengangeinstellungsmodul (25) und ein zweites Steuermodul (26) umfasst;
wobei das erste Steuermodul (16) jeweils mit dem ersten Laserempfangsmodul (14) und dem ersten Strahlengangeinstellungsmodul (15) verbunden ist und das zweite Steuermodul (26) jeweils mit dem zweiten Laserempfangsmodul (24) und dem zweiten Strahlengangeinstellungsmodul (25) verbunden ist;
wobei der Terahertz-Sender (11) dazu konfiguriert ist, ein erstes moduliertes Terahertz-Signal zu senden, das erste Lasersendemodul (13) dazu konfiguriert ist, ein erstes Farblasersignal zu senden, das erste Strahlengangeinstellungsmodul (15) dazu konfiguriert ist, das erste Terahertz-Signal und das erste Farblasersignal zu einem Strahl aus Signallicht zu kombinieren und das Signallicht durch die erste Richtantenne mit hoher Verstärkung (12) an die Terahertz-Empfangsvorrichtung (20) zu senden; wobei die zweite Richtantenne mit hoher Verstärkung (22) dazu konfiguriert ist, das Signallicht zu empfangen, das zweite Strahlengangeinstellungsmodul (25) dazu konfiguriert ist, das Signallicht in das erste Terahertz-Signal und das erste Farblasersignal zu teilen, der Terahertz-Empfänger (21) dazu konfiguriert ist, das erste Terahertz-Signal zu empfangen und zu demodulieren, das zweite Laserempfangsmodul (24) dazu konfiguriert ist, das erste Farblasersignal zu empfangen, das zweite Steuermodul (26) dazu konfiguriert ist, das zweite Strahlengangeinstellungsmodul (25) zu steuern, um eine Signalempfangsrichtung der zweiten Richtantenne mit hoher Verstärkung (22) gemäß der Signalstärke des ersten Farblasersignals einzustellen;
wobei das zweite Lasersendemodul (23) dazu konfiguriert ist, ein zweites Farblasersignal zu senden und das zweite Farblasersignal durch das zweite Strahlengangeinstellungsmodul (25) an die zweite Richtantenne mit hoher Verstärkung (22) zu senden, wobei die zweite Richtantenne mit hoher Verstärkung (22) dazu konfiguriert ist, das zweite Farblasersignal an die Terahertz-Sendevorrichtung (10) zu senden; wobei die erste Richtantenne mit hoher Verstärkung (12) dazu konfiguriert ist, das zweite Farblasersignal zu empfangen und das empfangene Signal durch das erste Strahlengangeinstellungsmodul (15) an das erste Laserempfangsmodul (14) zu senden, und das erste Steuermodul (16) dazu konfiguriert ist, das erste Strahlengangeinstellungsmodul (15) zu steuern, um die Signalsenderichtung der ersten Richtantenne mit hoher Verstärkung (12) gemäß der Signalstärke des zweiten Farblasersignals einzustellen.

2. Terahertz-Fernkommunikationssystem nach Anspruch 1, **dadurch gekennzeichnet, dass** das erste Strahlengangeinstellungsmodul (15) einen ersten Spektralspiegel, einen ersten Schnelllenkungsspiegel und einen zweiten Spektralspiegel umfasst, wobei der erste Schnelllenkungsspiegel mit dem ersten Steuermodul (16) verbunden ist;
wobei der erste Spektralspiegel dazu konfiguriert ist, das erste Terahertz-Signal und das erste Farblasersignal zu einem Strahl aus Signallicht zu kombinieren und das Signallicht an den ersten Schnelllenkungsspiegel zu senden, wobei der erste Schnelllenkungsspiegel dazu konfiguriert ist, das Signallicht zum zweiten Spektralspiegel zu reflektieren, und der zweite Spektralspiegel dazu konfiguriert ist, das Signallicht zur ersten Richtantenne mit hoher Verstärkung (12) zu reflektieren;
wobei das zweite Farblasersignal vom zweiten Spektralspiegel an das erste Laserempfangsmodul (14) gesendet wird und der erste Schnelllenkungsspiegel vom ersten Steuermodul zum Einstellen seines eigenen Reflexionswinkels gesteuert wird.

3. Terahertz-Fernkommunikationssystem nach Anspruch 1, **dadurch gekennzeichnet, dass** das zweite Strahlengangeinstellungsmodul (25) einen dritten Spektralspiegel, einen zweiten Schnelllenkungsspiegel und einen vierten Spektralspiegel umfasst und der zweite Schnelllenkungsspiegel mit dem zweiten Steuermodul verbunden ist;
wobei der dritte Spektralspiegel is dazu konfiguriert ist, das Signallicht in das erste Terahertz-Signal und das erste Farblasersignal zu teilen,wobei das erste Terahertz-Signal vom dritten Spektralspiegel zum zweiten Schnelllenkungsspiegel reflektiert wird, der zweite Schnelllenkungsspiegel dazu konfiguriert ist, das erste Terahertz-Signal zum vierten Spektralspiegel zu reflektieren, und der vierte Spektralspiegel dazu konfiguriert ist, das erste Terahertz-Signal zum Terahertz-Empfänger (21) zu reflektierten;
wobei das erste Farblasersignal vom dritten Spektralspiegel an das zweite Laserempfangsmodul gesendet wird und der zweite Schnelllenkungsspiegel von dem zweiten Steuermodul (26) zum Einstellen seines eigenen Reflexionswinkels gesteuert wird;
wobei das zweite Farblasersignal vom vierten Spektralspiegel gesendet, vom zweiten Schnelllenkungsspiegel reflektiert, wiederum vom dritten Spektralspiegel reflektiert und dann an die zweite Richtantenne mit hoher Verstärkung (22) gesendet wird.

4. Terahertz-Fernkommunikationssystem nach Anspruch 1, **dadurch gekennzeichnet, dass** die Farbe des ersten Farblasersignals sich von der Farbe des zweiten Farblasersignals unterscheidet.

5. Terahertz-Fernkommunikationssystem nach Anspruch 4, **dadurch gekennzeichnet, dass** das erste Farblasersignal rotes Licht mit einer Wellenlänge von 650 nm ist und das zweite Farblasersignal grünes Licht mit einer Wellenlänge von 532 nm ist;
oder das erste Farblasersignal grünes Licht mit einer Wellenlänge von 532 nm ist und das zweite Farblasersignal rotes Licht mit einer Wellenlänge von 650 nm ist.

## Revendications

1. Un système de communication térahertz, comprenant un dispositif émetteur térahertz (10) et un dispositif récepteur térahertz (20), dans lequel le dispositif émetteur térahertz (10) comprend un émetteur térahertz (11), une première antenne directionnelle à haut gain (12), un premier module émetteur laser (13), un premier module récepteur laser (14), un premier module de réglage de trajet optique (15) et un premier module de commande (16) ; le dispositif récepteur térahertz (20) comprenant un récepteur térahertz (21), une deuxième antenne directionnelle à haut gain (22), un deuxième module émetteur laser (23), un deuxième module récepteur laser (24), un deuxième module de réglage de trajet optique (25) et un deuxième module de commande (26) ;
dans lequel le premier module de commande (16) est respectivement connecté au premier module récepteur laser (14) et au premier module de réglage de trajet optique (15), et le deuxième module de commande (26) est respectivement connecté au deuxième module récepteur laser (24) et au deuxième module de réglage de trajet optique (25) ;
dans lequel l'émetteur térahertz (11) est configuré pour émettre un premier signal térahertz modulé, le premier module émetteur laser (13) est configuré pour émettre un premier signal laser coloré, le premier module de réglage de trajet optique (15) est configuré pour combiner le premier signal térahertz et le premier signal laser coloré en un faisceau de signal lumineux et pour émettre le signal lumineux au dispositif récepteur térahertz (20) via la première antenne directionnelle à haut gain (12) ; dans lequel la deuxième antenne directionnelle à haut gain (22) est configurée pour recevoir le signal lumineux, le deuxième module de réglage de trajet optique (25) est configuré pour diviser le signal lumineux en un premier signal térahertz et en un premier signal laser coloré, l'émetteur térahertz (21) est configuré pour recevoir et démoduler le premier signal térahertz, le deuxième module récepteur laser (24) est configuré pour recevoir le premier signal laser coloré, le deuxième module de commande (26) est configuré pour commander le deuxième module de réglage de trajet optique (25) afin de régler la direction de réception du signal de la deuxième antenne directionnelle à haut gain (22) en fonction de la puissance du signal du premier signal laser coloré ;
dans lequel le deuxième module émetteur laser (23) est configuré pour émettre un deuxième signal laser coloré et pour émettre le deuxième signal laser coloré à la deuxième antenne directionnelle à haut gain (22) via le deuxième module de réglage de trajet optique (25), la deuxième antenne directionnelle à haut gain (22) étant configurée pour émettre le deuxième signal laser coloré au dispositif émetteur térahertz (10) ; dans lequel la première antenne directionnelle à haut gain (12) est configurée pour recevoir le deuxième signal laser coloré et pour émettre le signal reçu au premier module récepteur laser (14) via premier module de réglage de trajet optique (15), et le premier module de commande (16) est configuré pour commander le premier module de réglage de trajet optique (15) afin de régler la direction d'émission du signal de la première antenne directionnelle à haut gain (12) en fonction de la puissance de signal du deuxième signal laser coloré.

2. Le système de communication térahertz selon la revendication 1, **caractérisé en ce que** le premier module de réglage de trajet optique (15) comprend un premier miroir dichroïque, un premier miroir à orientation rapide et un deuxième miroir dichroïque, le premier miroir dichroïque étant connecté au premier module de commande (16) ;
dans lequel le premier miroir dichroïque est configuré pour combiner le premier signal térahertz et le premier signal laser coloré en un faisceau de signal lumineux et pour émettre le signal lumineux au premier miroir à orientation rapide, le premier miroir à orientation rapide étant configuré pour réfléchir le signal lumineux sur le deuxième miroir dichroïque, et le deuxième miroir dichroïque étant configuré pour réfléchir le signal lumineux sur la première antenne directionnelle à haut gain (12) ;
dans lequel le deuxième signal laser coloré est émis au premier module récepteur laser (14) par le deuxième miroir dichroïque, et le premier miroir à orientation rapide est commandé par le premier module de commande afin de régler son propre angle réflecteur.

3. Le système de communication térahertz selon la revendication 1, **caractérisé en ce que** le deuxième module de réglage de trajet optique (25) comprend un troisième miroir dichroïque, un deuxième miroir à orientation rapide et un quatrième miroir dichroïque, et le deuxième miroir à orientation rapide étant connecté au deuxième module de commande ;
dans lequel le troisième miroir dichroïque est configuré pour diviser le signal lumineux en un premier signal térahertz et un premier signal laser coloré laser, le premier signal térahertz étant réfléchi sur le deuxième miroir à orientation rapide par le troisième miroir dichroïque, le deuxième miroir à orientation rapide étant configuré pour réfléchir le premier signal térahertz sur le quatrième miroir dichroïque, et le quatrième miroir dichroïque étant configuré pour réfléchir le premier signal térahertz sur le récepteur térahertz (21) ;
dans lequel le premier signal laser coloré est émis au deuxième module récepteur laser par le troisième miroir dichroïque, et le deuxième miroir à orientation rapide est commandé par le deuxième module de commande (26) afin de régler son propre angle réflecteur ;
dans lequel le deuxième signal laser coloré laser signal est émis par le quatrième miroir dichroïque, réfléchi par le deuxième miroir à orientation rapide, réfléchi ensuite par le troisième miroir à orientation rapide et enfin transféré à la deuxième antenne directionnelle à haut gain (22).

4. Le système de communication térahertz selon la revendication 1, **caractérisé en ce que** la couleur du premier signal laser coloré est différente de la couleur du deuxième signal laser coloré.

5. Le système de communication térahertz selon la revendication 4, **caractérisé en ce que** la couleur du premier signal laser coloré est une lumière rouge à longueur d'onde de 650 nm, et la couleur du deuxième signal laser coloré est une lumière verte à longueur d'onde de 532 nm ;
ou, la couleur du premier signal laser coloré est une lumière verte à longueur d'onde de 532 nm, et la couleur du deuxième signal laser coloré est une lumière rouge à longueur d'onde de 650 nm.
